# EUROPEAN PATENT SPECIFICATION

(11) **EP 3 591 302 B1**
(45) Date of publication and mention of the grant of the patent: **17.02.2021**
(21) Application number: 18397521.8
(22) Date of filing: 06.07.2018
(51) Int. Cl.: F24F 11/00, F24F 11/65, F24F 11/77, B63J 2/04, F24F 13/10, F24F 3/00, F24F 120/10

(54) **VENTILATION SYSTEM**
BELÜFTUNGSSYSTEM
SYSTÈME DE VENTILATION

(43) Date of publication of application: 08.01.2020
(73) Proprietor: Koja Oy, 33900 Tampere (FI)
(72) Inventor: Nousiainen, Esko, 33101 Tampere (FI)
(74) Representative: Berggren Oy, Tampere

(56) References cited:
- EP-A2- 0 916 575
- WO-A1-03/046445
- WO-A1-2008/082398
- WO-A1-2015/075782
- CN-U- 205 208 831
- JP-A- H05 164 381
- US-A- 5 279 609
- US-A1- 2013 178 987
- US-A1- 2015 168 000

## Description

### Technical field

The presented solution relates to a ventilation system suitable for a group of cabins of a ship and comprising fan coil systems suitable for the cabins.

### Background

Ships, especially cruise vessels are designed typically for several hundreds or thousands of passengers. Inside air in the cruise vessel must be at just right temperature and humidity levels no matter what climate zone the cruise vessel happens to be cruising through. An air conditioning system for the cruise vessel is mainly intended for the air conditioning of a cabin deck including areas like cabins, cabin corridors, pantries, toilets and so on. The system usually comprises an air handling unit (AHU), which takes in outside air, filters the air and either heats or cools the air and supplies it as fresh air to the air-conditioned areas. The fresh air is conducted from supply air ducts of the air handling unit through ductworks to the cabins and other areas. In the cabins, the temperature, humidity or pressure of the air is further adjusted to desired values by using fan coil devices installed in the cabins for the comfortable stay of passengers.

An example of a fan coil device suitable for ship cabins is disclosed in EP 3150926 A1. Another fan coil device is disclosed in WO 2015/075782 A1.

The need of supplying fresh air to the cabins is less during the night time. Therefore, currently known air handling units for ships are programmed to have a day-time mode and a night-time mode, in the latter mode the air flow from the air handling unit being restricted.

However, since the energy consumption of an air conditioning system for ships is considerable, there is a constant need of improving the saving of energy.

A solution according to the preamble of claim 1 is disclosed in WO 2008/082398 A1.

### Summary

The presented solution improves the energy saving.

The ventilation system for a group of cabins of a ship according to the solution is presented in claim 1.

In the presented solution, the ventilation system for a group of cabins of a ship comprises a group of fan coil systems each suitable for a different cabin of the group of cabins of the ship, an air handling unit, a second control valve and an automation system. Each fan coil system comprises a fan coil device adapted to draw cabin air of the cabin into the fan coil device, cool the cabin air, mix the cabin air with fresh air to be received from outside the cabin and conduct the cooled and mixed cabin air back into the cabin. The air handling unit comprises a supply duct for supplying fresh air to the group of fan coil systems.

Each fan coil system further comprises a first control valve capable of moving to a first position and a second position, the first and second positions being for regulating inflow of the fresh air into the fan coil device of the fan coil system. Each first control valve is configured to receive a first control signal and capable to move to the first and second positions in accordance with the first control signal.

The ventilation system further comprises a second control valve capable of moving to varying positions for regulating the supply of the fresh air through the supply duct. The second control valve is configured to receive a second control signal and capable to move to a predetermined position in accordance with the second control signal. The automation system is being connected to the first control valve of each fan coil system and the second control valve. The automation system is adapted to generate the first and second control signals and transmit them to the first control valve of each fan coil system and the second control valve.

The automation system is capable to form data representing occupancy rate of the group of cabins based on a group of the indications representing whether each cabin of the group of cabins is occupied or unoccupied. The ventilation system is controlled in accordance with the occupancy rate.

According to an example, the fan coil system or the automation system may comprise an electronic cabin control unit suitable to be in the cabin, the cabin control unit being capable to form the indication.

### Brief description of the drawings

- Figure 1: shows a simplified example of a fan coil system applied in the presented solution.
- Figure 2: shows a simplified example of a housing which encloses the fan coil system.
- Figure 3: shows a simplified example of a ventilation system according to the presented solution.

### Detailed description

The embodiments of the solution relate to a ventilation system suitable and designed for marine use, such as cabins and/or a cabin area including a group of cabins of a ship, especially a cruise vessel.

Cruise vessels are designed typically for several hundreds or thousands of passengers. Inside air in the cruise vessel must be at just right temperature and humidity levels no matter what climate zone the cruise vessel happens to be cruising through. Large number of passengers, extreme climate conditions and very limited space for air conditioning equipment bring various challenges to marine air condition equipment.

In the cruise vessel, the cabins for passengers may be equipped with a fan coil device located in the service corner of the cabin. The fan coil device cools the cabin air and circulates it inside the cabin. Fresh air from an air handling unit is introduced into the fan coil device through an air inlet and joined with the cooled cabin air flow before being led out through an air outlet of the fan coil device.

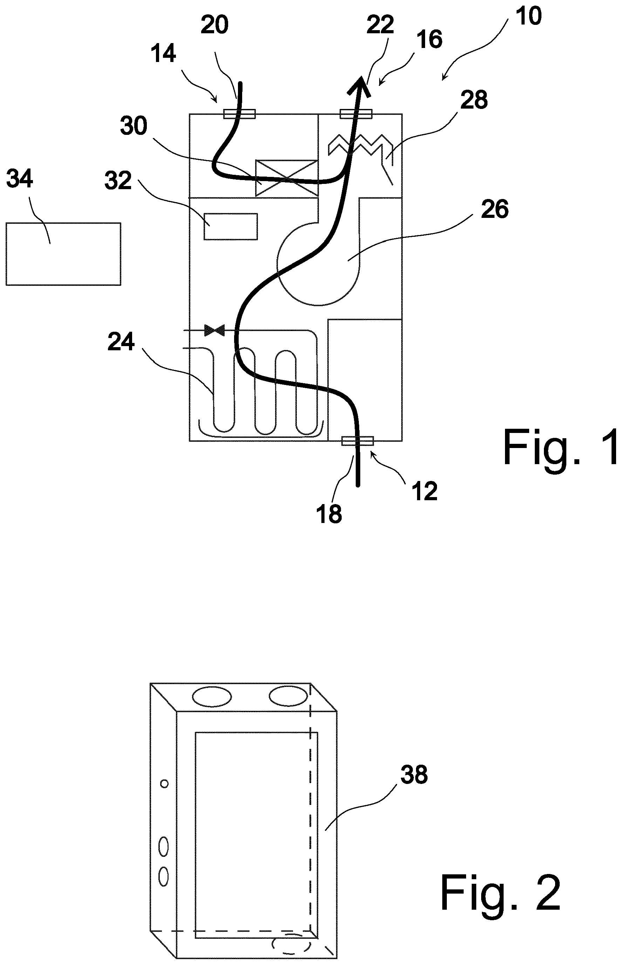

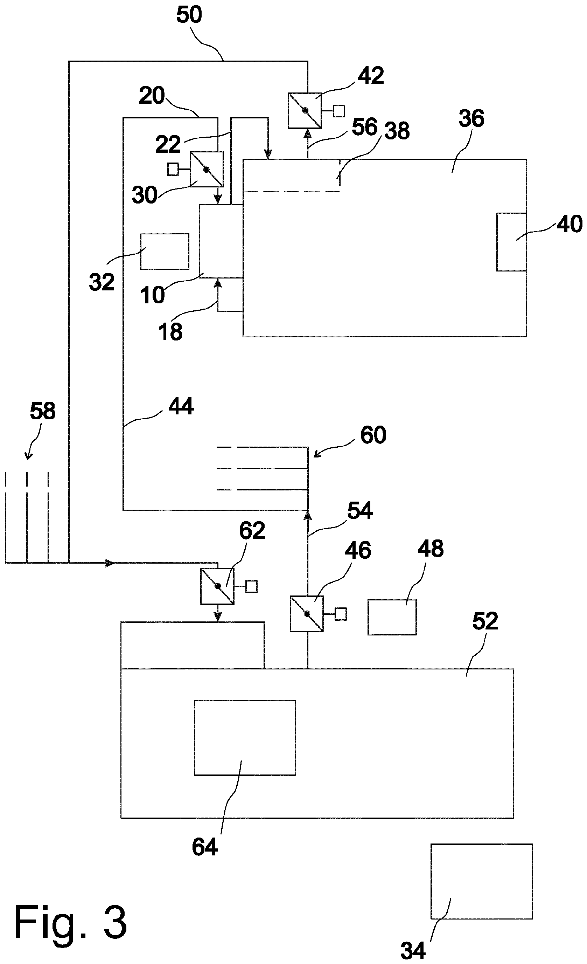

The fan coil system for a cabin 36 according to the presented solution and Figs. 1 and 3 comprises a fan coil device 10 and a control valve 30. The fan coil system may comprise an electronic control unit 32.

The fan coil device 10 is adapted to draw cabin air 18 of the cabin into the fan coil device, cool the cabin air, mix the cabin air with fresh air 20 to be received from outside the cabin and conduct the cooled and mixed cabin air 22 back into the cabin.

According to an example and Figs. 1 and 3, the fan coil device 10 comprises a cabin air inlet 12 for conducting the cabin air 18 into the fan coil device 10, a fresh air inlet 14 for conducting the fresh air 20 into the fan coil device 10, an air outlet 16 for conducting the cooled and mixed cabin air 22 from the fan coil device 10 into the cabin, a cooling coil 24 configured to cool the cabin air conducted from the cabin air inlet 12, and a fan 26 configured to vent the cooled cabin air towards the air outlet 16. The fan coil device 10 may further include a heating element 28 for controlling the temperature of the cooled and mixed cabin air 22 led through the air outlet 16.

The control valve 30 is capable of moving to, at least, first and second positions for regulating the inflow of the fresh air 20 into the fan coil device 10.

The control valve 30 may include the electronic control unit 32 that is connected to the control valve 30 to move the control valve 30. The control valve 30 or the control unit 32 is configured to receive a control signal and capable to move the control valve 30 to the first and second positions according to the control signal.

According to another example, the control valve 30 and/or the fan coil system is connected to an automation system 34 of the ship such that the automation system 34 may control the control valve 30 to move. According to an example the automation system 34 is connected to the control unit 32 such that the automation system 34 may control the control valve 30 to move.

The supply of the fresh air 20 into each cabin may therefore be regulated in variable volumes by means of the control valve 30. Therefore, for example, when there is less need of fresh air supply in the cabin 36, the inflow of the fresh air 20 may be restricted. The effects are the flexibility of air supply control and saving energy.

The fan coil system may further comprise an exhaust control valve 42, and possibly an exhaust air outlet 56, for conducting cabin air of the cabin 36, i.e. exhaust air from the cabin 36, especially from a toilet and/or a bathroom 38 of the cabin 36, to outside the cabin to, for example, a duct 50 comprised in an exhaust duct system 58. The bathroom may include a shower and/or a toilet. The cabin 36 may include one or more rooms, a sleeping area, and/or a work area. The exhaust control valve 42 is capable of moving to, at least, first and second positions for regulating the outflow of exhaust air through the exhaust control valve 42. The exhaust control valve 42 may include an electronic control unit to move the exhaust control valve 42.

The fan coil system and/or the automation system 34 is capable to move the exhaust control valve 42 to the first and second positions based on a control signal. This control signal may be the control signal mentioned above and explained below and the control signal may be based on the indication explained below.

The first position is adapted to allow a limited amount of exhaust air to pass the exhaust control valve 42, when the cabin 36 is unoccupied, and the second position is adapted to allow a full amount of exhaust air to pass or, in relation to the limited amount of exhaust air, an increased amount of exhaust air to pass, when the cabin 36 is occupied.

In one embodiment, the limited amount of exhaust air is equal to or less than 50 %, 40 %, 30 %, or 20 % of the volumetric flow rate of the full amount of exhaust air or the increased amount of exhaust air.

According to an example, the fan coil system, or the control unit 32, and the automation system 34 may be electronically connected to a bus for transferring control signals or data.

According to an example, the control valve 30 and/or the exhaust control valve 42 is of a pressure independent type, i.e. the volumetric flow rate of the fresh air 20 or the exhaust air passing the control valve 30 or the exhaust control valve 42 is kept constant under varying pressure conditions, so that the proper distribution of fresh air to the cabin can be maintained. Therefore, the control valve 30 and/or the exhaust control valve 42 may include devices for measuring air flow and adjusting the position of the valve.

According to an example, the control signal mentioned above is an indication representing whether the cabin 36 is occupied or unoccupied.

According to an example, the fan coil system or the automation system 34 is capable to generate the above-mentioned indication representing whether the cabin 36 is occupied by a passenger or unoccupied.

According to an example, the indication is in the form of the above-mentioned control signal based on which, for example, the fan coil system or the automation system 34 is adapted to act. Additionally, or alternatively, the automation system 34 is adapted to generate the control signal to move the control valve 30 and/or the exhaust control valve 42. The automation system may be adapted to generate the control signal on a basis of the indication.

According to a preferred example, the control signal is transmitted to the fan coil system and/or the control unit 32 of the fan coil system for controlling the control valve 30 and/or the exhaust control valve 42 to move accordingly to the first and second positions in accordance with the control signal.

The fan coil system and/or the control unit 32 of the fan coil system is capable to move the control valve 30 to the first and second positions in accordance with the control signal. The first position is adapted to allow a limited amount of the fresh air 20 to pass the control valve 30, when the cabin 36 is unoccupied, and the second position is adapted to allow a full amount of the fresh air 20 to pass or, in relation to the limited amount of fresh the air 20, an increased amount of the fresh air 20 to pass, when the cabin 36 is occupied.

Therefore, variable air volumes of the fresh air 20 are controllably supplied into the cabin 36 according to the occupancy of the cabin. When the cabin 36 is unoccupied, the need for the fresh air 20 is low, and the fan coil system allows less inflow of the fresh air 20 to the cabin 36, and when the cabin 36 is occupied and the need for the fresh air 20 increases, the fan coil system allows more inflow of the fresh air 20 to the cabin 36, automatically.

The magnitudes of the amounts of the fresh air 20 may be decided according to practical applications taking account of different conditions such as the climate, the size of the cabin 36, et cetera.

In one embodiment, the limited amount of the fresh air 20 is equal to or less than 50 %, 40 %, 30 %, or 20 % of the volumetric flow rate of the full amount of the fresh air 20 or the increased amount of the fresh air 20. Therefore, the flow of the fresh air 20 in the fan coil system can be controlled from the volumetric flow rate of 100 % to, for example, 30 % depending on the cabin occupancy.

The fan coil device 10 may be in the cabin 36 or connected to the cabin 36. The control valve 30 and/or the control unit 32 for controlling the inflow of the fresh air 20 may be conveniently placed in a suitable location according to the practical application. For example, the control valve 30 and/or the control unit 32 may be placed inside a housing 38 (see Fig. 2) which encloses the fan coil device 10, on top of the housing 38, in the fresh air inlet 14 or at a distance from the housing 38, such as in a duct 44 (see Fig. 3) leading the fresh air 20 to the fresh air inlet 14 of the fan coil device 10. According to a preferred example, the control valve 20 and/or the control unit 32 is located inside the housing 38.

When the inflow of the fresh air 20 into the cabin 36 is restricted by the control valve 30 according to the occupancy of the cabin 36, and/or the outflow of the cabin air is restricted by the exhaust control valve 42 according to the occupancy of the cabin 36, the fan coil system and/or the automation system 34 described above may enter an energy saving mode, thereby a lot of electrical energy required for cooling the fresh air is saved when compared to the full, unrestricted inflow of the fresh air 20 or the increased volumetric flow rate of the inflow of the fresh air 20.

The fan coil system according to the present solution may be connected to an air handling unit of an air conditioning system suitable for ships, especially cruise vessels. Moreover, even more electrical energy may be saved when the above-mentioned fan coil system forms a part of the ventilation system according to the present solution.

The ventilation system for a group of cabins comprises the above-mentioned fan coil system for each of the cabins. Each cabin of the group of cabins applies the arrangements of the cabin 36 explained above and in Fig. 3.

The ventilation system further comprises an air handling unit 52 adapted to cool the fresh air to be conducted to the group of fan coil systems and comprising, for example, a supply duct system 60 including the duct 44, for providing fresh air 54 to the group of fan coil systems. The ventilation system further comprises a second control valve 46 capable of moving to varying positions for regulating the flow of the fresh air 54 to the supply duct system 60.

The ventilation system further comprises the above-mentioned automation system 34 capable to control the first and second control valves 30, 46. The automation system 34 is electronically connected to the control valve 30, i.e. the first control valve, and the second control valve 46 to move the second control valve 46.

The ventilation system or the air handling unit 52 may comprise a fan system 64 including at least one fan for producing the flow of the fresh air 54 from the air handling unit 52 to the second control valve 46 and through the supply duct system 60 and the duct 44. The fan system 64 may be connected to the automation system 34 that is preferably adapted to control the speed of the at least one fan.

The second control valve 46 may include a control unit 48 to move the second control valve 46. The second control valve 46 or the control unit 48 is configured to receive a control signal from the automation system 34 for controlling the second control valve 46 to move to a predetermined position in accordance with the control signal. The control signal may be based on the indications originating from the group of cabins.

The total supply of the fresh air 54 from the air handling unit 52 to the group of cabins can thus be controlled automatically in variable volumes by the automation system 34 and by means of the second control valve 46 the position of which is adjustable. The variable air volume of the fresh air 54 brings the effects of flexibility of air supply control and saving of electrical energy as explained above. Additionally, the supply of the fresh air may be restricted by timing programs during the day and/or night time under the control of the automation system 34 and by means of the second control valve 46.

According to an example, the air handling unit 52 may comprise the exhaust duct system 58 including the duct 50, for conducting exhaust air from the group of cabins to the air handling unit 52. The ventilation system may further comprise a second exhaust control valve 62 capable of moving to varying positions for regulating the inflow of the exhaust air to the air handling unit 52. The second exhaust control valve 62 may include an electronic control unit to move the second exhaust control valve 62. The second exhaust control valve 62 may be configured to receive a control signal from the automation system 34 for controlling the second exhaust control valve 62 to move to a predetermined position in accordance with the control signal. The control signal may be based on the indications originating from the group of cabins.

The first control valve 30, the second control valve 46, the exhaust control valve 42, i.e. the first exhaust control valve, and/or the second exhaust control valve 62 may be in the form of a damper having one or more damper blades that may be, for example, circular or rectangular. The first control valve 30, the second control valve 46, the exhaust control valve 42, and/or the second exhaust control valve 62 may include a controllable actuator for the adjustment of the valve and to control, for example, the positions of the one or more damper blades.

According to an example of the present solution, the ventilation system is capable to generate the above-mentioned indication representing whether the cabin 36 is occupied or unoccupied.

According to yet another example the fan coil system, the automation system 34, or the ventilation system may further comprise a cabin control unit 40 located in each cabin of the group of cabins, the cabin control unit 40 being capable to form the above-mentioned indication representing whether the cabin 36 or each cabin is occupied by a passenger or unoccupied.

The cabin control unit 40 may comprise a sensor based on which the indication may be generated by the cabin control unit 40. The sensor may be an infrared sensor, an optical sensor, a weight sensor, a presence sensor or a motion sensor which detects, for example, the movements or presence of a passenger in the cabin, entering the cabin or leaving the cabin. The weight sensor may be installed in the floor.

Alternatively, or additionally, the cabin control unit 40 may comprise a switch manually controlled by the passenger or mechanically activated by an object, or the switch is activated by means of an information carrier wirelessly paired with the switch, the object or the information carrier being, for example, a keycard, a token, a wristband or the like, held or carried by the passenger.

Preferably, the switch is adapted to sense the information carrier when the information carrier is near the switch and or/the cabin.

The cabin control unit 40 may be electronically connected to the control unit 32 and/or the automation system 34, for transmitting the indication in the form of the control signal to the control unit 32 and/or the automation system 34.

The cabin control unit 40 may be electronically connected to the above-mentioned bus for transferring the indication, the control signal, and/or data. The air handling unit 52, the second exhaust control valve 62, and/or the second control valve 46, or the control unit 48, may be electronically connected to the bus.

According to an example, the automation system 34 is capable to form data representing the occupancy rate of the group of cabins based on a group of indications each representing whether a different cabin of the group of cabins is occupied or unoccupied. Each indication corresponds the indication disclosed above in this description. The occupancy rate indicates the number of occupied cabins, the number of unoccupied cabins, or the proportion of the occupied cabins in relation to the unoccupied cabins, or vice versa. The occupancy rate may be expressed as a percentage, ranging from 0 % to 100 %, for example, or as a ratio.

According to an example, the automation system 34 is capable to move the second control valve 46 to predetermined positions in accordance with the above-mentioned group of indications. In another example, the automation system 34 controls the second control valve 46 to predetermined positions in accordance with the above-mentioned occupancy rate. Additionally, the automation system 34 controls the speed of the at least one fan in the fan system 64 in accordance with the above-mentioned occupancy rate.

The second control valve 46 is adapted to allow a decreasing amount of the fresh air 54 to pass the second control valve 46, when the occupancy rate decreases, and an increasing amount of the fresh air 54 to pass the second control valve 46, when the occupancy rate increases. At the same, the speed of the at least one fan of the fan system 64 may be reduced to decrease the airflow with the decreasing occupancy rate and increased to increase the airflow with the increasing occupancy rate. According to an example, the amount of the fresh air 54 is set to vary between a maximum amount, i.e. the 100 % volumetric flow rate, and a minimum amount, for example 50 %, 40 %, 30 % or 20 % of the volumetric flow rate of the maximum amount.

Thus, the second control valve 46, the air handling unit 52, and the fan system 64 may thus regulate the flow of the fresh air 54 depending on the occupancy rate of the group of cabins.

According to an example and under the control of the automation system 34, the functioning of the second exhaust control valve 62 follows the occupancy rate and the principles and operation of the second control valve 46 as explained in this description. Furthermore, in one example, the position of the second exhaust control valve 62 imitates or follows the operation of second control valve 46 controlled by the occupancy rate. This has the advantage that pressure conditions in the ventilation system and in each of the cabins may be maintained as decided appropriate in each practical application.

The amounts of fresh air 54, or exhaust air, applicable at each location of the ventilation system may be decided according to practical applications taking account of different conditions such as the number of cabins and other technical characteristics of the ventilation system. Such conditions may provide the requirements for selecting the various components of the ventilation system.

According to an example, the second control valve 46 and/or the second exhaust control valve 62 is of a pressure independent type, i.e. the flow rate of the fresh air 54 or the exhaust air passing through the second control valve 46 or the second exhaust control valve 62 is kept constant under varying pressure conditions, so that the proper functioning of the ventilation system with regards to various airflows can be guaranteed. Therefore, the second control valve 46 and/or the second exhaust control valve 62 may include devices for measuring air flow and adjusting the position of the valve.

In an example, when a passenger leaves the cabin 36, namely the cabin is unoccupied, the first control valve 30 of the fan coil system of the cabin 36 is changed to the first position, allowing only the limited amount of the fresh air 20, for example equal to 30 % of the full amount of the fresh air 20, to flow into the fan coil device 10 of the cabin 36, and the fan coil system is at energy saving mode. When the passenger arrives back to the cabin 36, namely the cabin is occupied, the first control valve 30 is changed to the second position, thereby the supply flow of the fresh air 20 is quickly changed to, for example, full flow.

Additionally, when the cabin is unoccupied, the exhaust control valve 42 of the cabin 36 may be changed to the first position, allowing only a limited amount of exhaust air, for example equal to 30 % of the full amount of exhaust air, to flow out of the cabin 36. Additionally, when the cabin is occupied, the exhaust control valve 42 of the cabin 36 may be changed to the second position, thereby the outflow of exhaust air is quickly changed to, for example, full flow.

In one example, the full cooling power of the air handling unit 52 is in use when all the cabins of the group of cabins are occupied, and the maximum amount of the fresh air 54 (100 %) is supplied from the air handling unit 52. When all the cabins are unoccupied the air handling unit 52 may go to full idle, supplying only the minimum amount of the fresh air 54 (for example 30 %), and the cooling power is at a level lower than during the 100 % state. Therefore, the cooling power varies according to the cabin occupancy. This about 80 % or less saving in cooling energy leads to saving of electrical energy. Additionally, the at least one fan of the fan system 64 may be running in a lower speed demanding less electrical energy and creating additional savings in electrical energy. During the night time the amount of fresh air supplied by the air handling unit 52 may be restricted to, for example, 70% by timing programs running in the automation system 34. Therefore, total savings in electrical energy may be considerable. These savings are gained mainly when all the cabins are unoccupied while the ship is at port. At sea the occupancy rate during the day is around 50% and therefore the saving is around 50%.

The automation system 34 may be based on, for example, microprocessors, control software and input/output devices enabling automatic control and human interaction by an operator. The automation system 34 may have two or more separate units having differing functions and being connected with each other. The control units mentioned above in this description may form a part of the automation system 34. Information, control signals or data related to the above-mentioned ventilation system may be received in and processed by the automation system 34. Control algorithms stored and run in the automation system 34 are configured to determine or calculate the various control signals, the one or more indications and/or the occupancy rate explained in this description. The automation system 34 makes decisions on the control actions best suited for the situation and required to perform the operations explained above in this description, including selecting the positions of the various valves and the speeds of the fans of the ventilation systems.

The presented solution is not restricted to the examples and embodiments presented above but by the following claims.

## Claims

1. A ventilation system for a group of cabins of a ship, comprising a group of fan coil systems each suitable for a cabin (36) of the group of cabins, each fan coil system comprising
a fan coil device (10) adapted to draw cabin air (18) of the cabin into the fan coil device, cool the cabin air, mix the cabin air with fresh air (20) to be received from outside the cabin and conduct the cooled and mixed cabin air (22) back into the cabin, and
a first control valve (30) capable of moving to a first position and a second position, the first and second positions being for regulating inflow of fresh air (20) into the fan coil device (10),
wherein each first control valve (30) is configured to receive a first control signal and capable to move to the first and second positions in accordance with the first control signal,
wherein the ventilation system further comprises
an air handling unit (52) comprising a supply duct system (60) for supplying the fresh air (54) to the group of fan coil systems,
**characterized in that** the ventilation system further comprises
a second control valve (46) capable of moving to varying positions for regulating the supply of the fresh air (54) through the supply duct system (60),
wherein the second control valve (46) is configured to receive a second control signal and capable to move to a predetermined position in accordance with the second control signal, and
an automation system (34), being connected to the first control valve (30) of each fan coil system and the second control valve (46) and adapted to generate the first and second control signals and to transmit the first control signal to the first control valve (30) of each fan coil system and the second control signal to the second control valve (46),
wherein the ventilation system, the automation system (34) or the group of the fan coil systems is capable to generate indications representing whether each cabin (36) of the group of cabins is occupied or unoccupied, wherein the indication is the first control signal or the automation system is adapted to generate the first control signal based on the indication, and
wherein the automation system (34) has means to form data representing occupancy rate of the group of cabins based on a group of the indications representing whether each cabin (36) of the group of cabins is occupied or unoccupied.

2. The ventilation system according to claim 1, wherein the automation system (34) comprises a group of electronic cabin control units (40) each suitable to be in a cabin (36) of the group of cabins, each cabin control unit (40) being capable to form the indication representing whether the cabin (36) associated with the cabin control unit (40) is occupied or unoccupied, and each cabin control unit (40) being connected to the automation system (34) for transmitting the indication to the automation system that is adapted to generate the first control signal based on the indication.

3. The ventilation system according to claim 1 or 2, wherein the second control valve (46) is adapted to allow a decreasing amount of the fresh air (54) to pass when the occupancy rate is decreasing, and the second control valve (46) is adapted to allow an increasing amount of the fresh air (54) to pass when the occupancy rate is increasing.

4. The ventilation system according to claim 3, wherein the air handling unit (52) comprises a fan system (64) including at least one fan for generating the supply flow of the fresh air (54) from the air handling unit (52) through the second control valve (46), the fan system (64) being electronically connected to the automation system (34), wherein speed of the at least one fan is under the control of the automation system (34) set to reduce with the decreasing occupancy rate and to increase with the increasing occupancy rate.

5. The ventilation system according to claim 1, wherein the first control valve (30) comprises an electronic control unit (32) being connected to the first control valve (30), configured to receive the first control signal, and capable to move the first control valve to the first and second positions in accordance with the first control signal.

6. The ventilation system according to claim 5,
wherein the fan coil system further comprises an electronic cabin control unit (40) suitable to be in the cabin (36), the cabin control unit being capable to form the indication representing whether the cabin (36) is occupied or unoccupied, and
wherein the cabin control unit (40) is connected to the control unit (32) for transmitting the indication in the form of the first control signal to the control unit (32).

7. The ventilation system according to claim 5,
wherein the fan coil system further comprises an electronic cabin control unit (40) suitable to be in the cabin (36), the cabin control unit being capable to form the indication representing whether the cabin (36) is occupied or unoccupied, and
wherein the cabin control unit (40) is connected to the automation system (34) for transmitting the indication to the automation system that is adapted to generate the first control signal based on the indication and to transmit the first control signal to the control unit (32).

8. The ventilation system according to any one of claim 5 to 7, wherein the first position is adapted to allow a limited amount of the fresh air (20) to pass and the second position is adapted to allow a full amount of the fresh air (20) to pass or, in relation to the limited amount of the fresh air, an increased amount of the fresh air (20) to pass.

9. The ventilation system according to any one of claims 5 to 8, wherein the fan coil system further comprises:
an exhaust control valve (42) capable of moving to a first position and a second position, the first and second positions of the exhaust control valve (42) being for regulating outflow of cabin air of the cabin (36) to outside the cabin, the exhaust control valve (42) being configured to receive the first control signal and capable to move to the first and second positions of the exhaust control valve (42) in accordance with the first control signal, and
wherein the first position of the exhaust control valve (42) is adapted to allow a limited amount of cabin air to pass and the second position of the exhaust control valve (42) is adapted to allow a full amount of cabin air to pass or, in relation to the limited amount of cabin air, an increased amount of cabin air to pass.

10. The ventilation system according to claim 8 or 9, wherein the limited amount is equal to or less than 50 %, 40 %, 30 %, or 20 % of the volumetric flow rate of the full amount or the increased amount.

11. The ventilation system according to any one of claims 5 to 10, wherein the fan coil system further comprises a housing (38) in which the fan coil device (10) is enclosed and a duct (44) for leading the fresh air (20) to the fan coil device (10), and wherein the first control valve (30) is in the duct (44) or in the housing (38).

12. The ventilation system according to any one of claims 5 to 11, wherein the fan coil device (10) comprises:
a cabin air inlet (12) for conducting the cabin air (18) into the fan coil device,
a fresh air inlet (14) for conducting the fresh air (20) into the fan coil device,
an air outlet (16) for conducting the cooled and mixed cabin air from the fan coil device into the cabin,
a cooling coil (24) configured to cool the cabin air conducted from the cabin air inlet (12), and
a fan (26) configured to vent the cooled cabin air towards the air outlet (16).

## Patentansprüche

1. Belüftungssystem für eine Gruppe von Kabinen eines Schiffs, umfassend eine Gruppe von Gebläsekonvektorsystemen, die jeweils für eine Kabine (36) der Gruppe von Kabinen geeignet sind, wobei jedes Gebläsekonvektorsystem Folgendes umfasst:
eine Gebläsekonvektorvorrichtung (10), die dazu geeignet ist, Kabinenluft (18) der Kabine in die Gebläsekonvektorvorrichtung zu ziehen, die Kabinenluft zu kühlen, die Kabinenluft mit Frischluft (20) zu mischen, die von außerhalb der Kabine empfangen wird, und die gekühlte und gemischte Kabinenluft (22) zurück in die Kabine zu leiten, und
ein erstes Steuerventil (30), das in der Lage ist, sich in eine erste Position und eine zweite Position zu bewegen, wobei die erste und die zweite Position zum Regulieren des Einströmens von Frischluft (20) in die Gebläsekonvektorvorrichtung (10) vorgesehen sind,
wobei jedes erste Steuerventil (30) dafür ausgelegt ist, ein erstes Steuersignal zu empfangen, und in der Lage ist, sich entsprechend dem ersten Steuersignal in die erste und die zweite Position zu bewegen,
wobei das Belüftungssystem ferner umfasst:
eine Luftbehandlungseinheit (52), die ein Zufuhrkanalsystem (60) zum Zuführen der Frischluft (54) zu der Gruppe von Gebläsekonvektorsystemen umfasst,
**dadurch gekennzeichnet, dass** das Belüftungssystem ferner umfasst:
ein zweites Steuerventil (46), das in der Lage ist, sich zu variierenden Positionen zum Regulieren der Zufuhr der Frischluft (54) durch das Zufuhrkanalsystem (60) zu bewegen, wobei das zweite Steuerventil (46) dafür ausgelegt ist, ein zweites Steuersignal zu empfangen, und in der Lage ist, sich entsprechend dem zweiten Steuersignal zu einer vorbestimmten Position zu bewegen, und
ein Automatisierungssystem (34), das mit dem ersten Steuerventil (30) eines jeden Gebläsekonvektorsystems und dem zweiten Steuerventil (46) verbunden und dazu geeignet ist, das erste und das zweite Steuersignal zu erzeugen und das erste Steuersignal an das erste Steuerventil (30) eines jeden Gebläsekonvektorsystems und das zweite Steuersignal an das zweite Steuerventil (46) zu übertragen,
wobei das Belüftungssystem, das Automatisierungssystem (34) oder die Gruppe der Gebläsekonvektorsysteme in der Lage ist, Anzeigen zu erzeugen, die darstellen, ob jede Kabine (36) der Gruppe von Kabinen belegt oder nicht belegt ist, wobei die Anzeige das erste Steuersignal ist oder das Automatisierungssystem dazu geeignet ist, das erste Steuersignal basierend auf der Anzeige zu erzeugen, und
wobei das Automatisierungssystem (34) Mittel zum Bilden von Daten aufweist, die die Belegungsrate der Gruppe von Kabinen basierend auf einer Gruppe der Anzeigen darstellen, die darstellen, ob jede Kabine (36) der Gruppe von Kabinen belegt oder nicht belegt ist.

2. Belüftungssystem nach Anspruch 1, wobei das Automatisierungssystem (34) eine Gruppe von elektronischen Kabinensteuereinheiten (40) umfasst, die jeweils geeignet sind, sich in einer Kabine (36) der Gruppe von Kabinen zu befinden, wobei jede Kabinensteuereinheit (40) in der Lage ist, die Anzeige zu bilden, die darstellt, ob die Kabine (36), die der Kabinensteuereinheit (40) zugeordnet ist, belegt oder nicht belegt ist, und wobei jede Kabinensteuereinheit (40) mit dem Automatisierungssystem (34) verbunden ist, um die Anzeige an das Automatisierungssystem zu übertragen, das dazu geeignet ist, das erste Steuersignal basierend auf der Anzeige zu erzeugen.

3. Belüftungssystem nach Anspruch 1 oder 2, wobei das zweite Steuerventil (46) dazu geeignet ist, eine abnehmende Menge der Frischluft (54) hindurchzulassen, wenn die Belegungsrate abnimmt, und das zweite Steuerventil (46) dazu geeignet ist, eine zunehmende Menge der Frischluft (54) hindurchzulassen, wenn die Belegungsrate zunimmt.

4. Belüftungssystem nach Anspruch 3, wobei die Luftbehandlungseinheit (52) ein Gebläsesystem (64) umfasst, das mindestens ein Gebläse zum Erzeugen des Zufuhrstroms der Frischluft (54) von der Luftbehandlungseinheit (52) durch das zweite Steuerventil (46) aufweist, wobei das Gebläsesystem (64) elektronisch mit dem Automatisierungssystem (34) verbunden ist, wobei die Geschwindigkeit des mindestens einen Gebläses unter der Steuerung des Automatisierungssystems (34) eingestellt wird, um mit der abnehmenden Belegungsrate abzunehmen und mit der zunehmenden Belegungsrate zuzunehmen.

5. Belüftungssystem nach Anspruch 1, wobei das erste Steuerventil (30) eine elektronische Steuereinheit (32) umfasst, die mit dem ersten Steuerventil (30) verbunden ist, das dafür ausgelegt ist, das erste Steuersignal zu empfangen, und die in der Lage ist, das erste Steuerventil entsprechend dem ersten Steuersignal in die erste und zweite Position zu bewegen.

6. Belüftungssystem nach Anspruch 5,
wobei das Gebläsekonvektorsystem ferner eine elektronische Kabinensteuereinheit (40) umfasst, die geeignet ist, sich in der Kabine (36) zu befinden, wobei die Kabinensteuereinheit in der Lage ist, die Anzeige zu bilden, die darstellt, ob die Kabine (36) belegt oder nicht belegt ist, und
wobei die Kabinensteuereinheit (40) mit der Steuereinheit (32) verbunden ist, um die Anzeige in Form des ersten Steuersignals an die Steuereinheit (32) zu übertragen.

7. Belüftungssystem nach Anspruch 5,
wobei das Gebläsekonvektorsystem ferner eine elektronische Kabinensteuereinheit (40) umfasst, die geeignet ist, sich in der Kabine (36) zu befinden, wobei die Kabinensteuereinheit in der Lage ist, die Anzeige zu bilden, die darstellt, ob die Kabine (36) belegt oder nicht belegt ist, und
wobei die Kabinensteuereinheit (40) mit dem Automatisierungssystem (34) verbunden ist, um die Anzeige an das Automatisierungssystem zu übertragen, das dazu geeignet ist, das erste Steuersignal basierend auf der Anzeige zu erzeugen und das erste Steuersignal an die Steuereinheit (32) zu übertragen.

8. Belüftungssystem nach einem der Ansprüche 5 bis 7, wobei die erste Position dazu geeignet ist, eine begrenzte Menge der Frischluft (20) durchzulassen, und die zweite Position dazu geeignet ist, eine vollständige Menge der Frischluft (20) durchzulassen, oder im Verhältnis zur begrenzten Menge der Frischluft eine erhöhte Menge der Frischluft (20) durchzulassen.

9. Belüftungssystem nach einem der Ansprüche 5 bis 8, wobei das Gebläsekonvektorsystem ferner umfasst:
ein Auslasssteuerventil (42), das in der Lage ist, sich in eine erste Position und eine zweite Position zu bewegen, wobei die erste und die zweite Position des Ablasssteuerventils (42) zum Regulieren des Ausströmens von Kabinenluft der Kabine (36) nach außerhalb der Kabine gedacht ist, wobei das Ablasssteuerventil (42) dafür ausgelegt ist, das erste Steuersignal zu empfangen, und in der Lage ist, sich entsprechend dem ersten Steuersignal in die erste und die zweite Position des Ablasssteuerventils (42) zu bewegen, und wobei die erste Position des Ablasssteuerventils (42) dazu geeignet ist, eine begrenzte Menge an Kabinenluft durchzulassen, und die zweite Position des Ablasssteuerventils (42) dazu geeignet ist, eine vollständige Menge an Kabinenluft durchzulassen, oder im Verhältnis zur begrenzten Menge an Kabinenluft eine erhöhte Menge an Kabinenluft durchzulassen.

10. Belüftungssystem nach Anspruch 8 oder 9, wobei die begrenzte Menge gleich oder weniger als 50 %, 40 %, 30 % oder 20 % des Volumenstroms der gesamten Menge oder der erhöhten Menge ist.

11. Belüftungssystem nach einem der Ansprüche 5 bis 10, wobei das Gebläsekonvektorsystem ferner ein Gehäuse (38), in dem die Gebläsekonvektorvorrichtung (10) eingeschlossen ist, und einen Kanal (44) zum Führen der Frischluft (20) zur Gebläsekonvektorvorrichtung (10) umfasst und wobei sich das erste Steuerventil (30) in dem Kanal (44) oder in dem Gehäuse (38) befindet.

12. Belüftungssystem nach einem der Ansprüche 5 bis 11, wobei die Gebläsekonvektorvorrichtung (10) umfasst:
einen Kabinenlufteinlass (12) zum Leiten der Kabinenluft (18) in die Gebläsekonvektorvorrichtung,
einen Frischlufteinlass (14) zum Leiten der Frischluft (20) in die Gebläsekonvektorvorrichtung,
einen Luftauslass (16) zum Leiten der gekühlten und gemischten Kabinenluft von der Gebläsekonvektorvorrichtung in die Kabine,
eine Kühlschlange (24), die dafür ausgelegt ist, die Kabinenluft, die von dem Kabinenlufteinlass (12) geleitet wurde, zu kühlen, und
ein Gebläse (26), das dafür ausgelegt ist, die gekühlte Kabinenluft zum Luftauslass (16) zu entlüften.

## Revendications

1. Système de ventilation pour un groupe de cabines d'un navire, comprenant un groupe de systèmes ventilo-convecteurs chacun approprié pour une cabine (36) du groupe de cabines, chaque système ventilo-convecteur comprenant
un dispositif ventilo-convecteur (10) adapté pour aspirer l'air de cabine (18) de la cabine dans le dispositif ventilo-convecteur, refroidir l'air de cabine, mélanger l'air de cabine avec de l'air frais (20) devant être reçu depuis l'extérieur de la cabine et ramener l'air de cabine refroidi et mélangé (22) dans la cabine, et
une première soupape de commande (30) capable de se déplacer vers une première position et une deuxième position, les première et deuxième positions étant destinées à réguler le débit entrant d'air frais (20) dans le dispositif ventilo-convecteur (10),
dans lequel chaque première soupape de commande (30) est configurée pour recevoir un premier signal de commande et est capable de se déplacer vers les première et deuxième positions conformément au premier signal de commande,
dans lequel le système de ventilation comprend en outre
une unité de traitement d'air (52) comprenant un système de conduit d'alimentation (60) pour fournir l'air frais (54) au groupe de systèmes ventilo-convecteurs,
**caractérisé en ce que** le système de ventilation comprend en outre
une deuxième soupape de commande (46) capable de se déplacer vers des positions variables pour réguler l'alimentation en air frais (54) à travers le système de conduit d'alimentation (60),
dans lequel la deuxième soupape de commande (46) est configurée pour recevoir un deuxième signal de commande et est capable de se déplacer vers une position prédéterminée conformément au deuxième signal de commande, et
un système d'automatisation (34), qui est relié à la première soupape de commande (30) de chaque système ventilo-convecteur et à la deuxième soupape de commande (46) et adapté pour générer les premier et deuxième signaux de commande et pour transmettre le premier signal de commande à la première soupape de commande (30) de chaque système ventilo-convecteur et le deuxième signal de commande à la deuxième soupape de commande (46),
dans lequel le système de ventilation, le système d'automatisation (34) ou le groupe des systèmes ventilo-convecteurs est capable de générer des indications représentant si chaque cabine (36) du groupe de cabines est occupée ou inoccupée, dans lequel l'indication est le premier signal de commande ou le système d'automatisation est adapté pour générer le premier signal de commande sur la base de l'indication, et
dans lequel le système d'automatisation (34) a des moyens pour former des données représentant le taux d'occupation du groupe de cabines sur la base d'un groupe des indications représentant si chaque cabine (36) du groupe de cabines est occupée ou inoccupée.

2. Système de ventilation selon la revendication 1, dans lequel le système d'automatisation (34) comprend un groupe d'unités de commande électronique de cabine (40) chacune appropriée pour être utilisée dans une cabine (36) du groupe de cabines, chaque unité de commande de cabine (40) étant capable de former l'indication représentant si la cabine (36) associée à l'unité de commande de cabine (40) est occupée ou inoccupée, et chaque unité de commande de cabine (40) étant reliée au système d'automatisation (34) pour transmettre l'indication au système d'automatisation qui est adapté pour générer le premier signal de commande sur la base de l'indication.

3. Système de ventilation selon la revendication 1 ou 2, dans lequel la deuxième soupape de commande (46) est adaptée pour permettre le passage d'une quantité décroissante de l'air frais (54) lorsque le taux d'occupation diminue, et la deuxième soupape de commande (46) est adaptée pour permettre le passage d'une quantité croissante de l'air frais (54) lorsque le taux d'occupation augmente.

4. Système de ventilation selon la revendication 3, dans lequel l'unité de traitement d'air (52) comprend un système de ventilation (64) comportant au moins un ventilateur pour générer le flux d'alimentation en air frais (54) provenant de l'unité de traitement d'air (52) à travers la deuxième soupape de commande (46), le système de ventilation (64) étant relié électroniquement au système d'automatisation (34), dans lequel la vitesse de l'au moins un ventilateur est sous la commande du système d'automatisation (34) réglée pour diminuer avec le taux d'occupation décroissant et pour augmenter avec le taux d'occupation croissant.

5. Système de ventilation selon la revendication 1, dans lequel la première soupape de commande (30) comprend une unité de commande électronique (32) qui est reliée à la première soupape de commande (30), configurée pour recevoir le premier signal de commande, et capable de déplacer la première soupape de commande vers les première et deuxième positions conformément au premier signal de commande.

6. Système de ventilation selon la revendication 5,
dans lequel le système ventilo-convecteur comprend en outre une unité de commande électronique de cabine (40) appropriée pour être utilisée dans la cabine (36), l'unité de commande de cabine étant capable de former l'indication représentant si la cabine (36) est occupée ou inoccupée, et
dans lequel l'unité de commande de cabine (40) est reliée à l'unité de commande (32) pour transmettre l'indication sous la forme du premier signal de commande à l'unité de commande (32).

7. Système de ventilation selon la revendication 5,
dans lequel le système ventilo-convecteur comprend en outre une unité de commande électronique de cabine (40) appropriée pour être utilisée dans la cabine (36), l'unité de commande de cabine étant capable de former l'indication représentant si la cabine (36) est occupée ou inoccupée, et
dans lequel l'unité de commande de cabine (40) est reliée au système d'automatisation (34) pour transmettre l'indication au système d'automatisation qui est adapté pour générer le premier signal de commande sur la base de l'indication et pour transmettre le premier signal de commande à l'unité de commande (32).

8. Système de ventilation selon l'une quelconque des revendications 5 à 7, dans lequel la première position est adaptée pour permettre le passage d'une quantité limitée de l'air frais (20) et la deuxième position est adaptée pour permettre le passage d'une quantité totale de l'air frais (20) ou, par rapport à la quantité limitée de l'air frais, le passage d'une quantité accrue de l'air frais (20).

9. Système de ventilation selon l'une quelconque des revendications 5 à 8, dans lequel le système ventilo-convecteur comprend en outre :
une soupape de commande d'échappement (42) capable de se déplacer vers une première position et une deuxième position, les première et deuxième positions de la soupape de commande d'échappement (42) étant destinées à réguler le débit sortant d'air de cabine de la cabine (36) vers l'extérieur de la cabine, la soupape de commande d'échappement (42) étant configurée pour recevoir le premier signal de commande et capable de se déplacer vers les première et deuxième positions de la soupape de commande d'échappement (42) conformément au premier signal de commande, et
dans lequel la première position de la soupape de commande d'échappement (42) est adaptée pour permettre le passage d'une quantité limitée d'air de cabine et la deuxième position de la soupape de commande d'échappement (42) est adaptée pour permettre le passage d'une quantité totale d'air de cabine ou, par rapport à la quantité limitée d'air de cabine, le passage d'une quantité accrue d'air de cabine.

10. Système de ventilation selon la revendication 8 ou 9, dans lequel la quantité limitée est inférieure ou égale à 50%, 40%, 30% ou 20% du débit volumétrique de la quantité totale ou de la quantité accrue.

11. Système de ventilation selon l'une quelconque des revendications 5 à 10, dans lequel le système ventilo-convecteur comprend en outre un boîtier (38) dans lequel le dispositif ventilo-convecteur (10) est enfermé et un conduit (44) pour conduire l'air frais (20) au dispositif ventilo-convecteur (10), et dans lequel la première soupape de commande (30) se trouve dans le conduit (44) ou dans le boîtier (38).

12. Système de ventilation selon l'une quelconque des revendications 5 à 11, dans lequel le dispositif ventilo-convecteur (10) comprend :
une entrée d'air de cabine (12) pour amener l'air de cabine (18) dans le dispositif ventilo-convecteur,
une entrée d'air frais (14) pour amener l'air frais (20) dans le dispositif ventilo-convecteur,
une sortie d'air (16) pour amener l'air de cabine refroidi et mélangé depuis le dispositif ventilo-convecteur dans la cabine,
un serpentin de refroidissement (24) configuré pour refroidir l'air de cabine amené à partir de l'entrée d'air de cabine (12), et
un ventilateur (26) configuré pour évacuer l'air de cabine refroidi vers la sortie d'air (16).
